# EUROPÄISCHE PATENTSCHRIFT

(11) **EP 1 735 673 B1**
(45) Veröffentlichungstag und Bekanntmachung des Hinweises auf die Patenterteilung: **09.04.2008**
(21) Anmeldenummer: 05708024.4
(22) Anmeldetag: 16.02.2005
(51) Int. Cl.: G05D 16/20, F02D 41/38

(54) **VERFAHREN ZUM ÜBERWACHEN EINER KRAFTSTOFFZUFÜHREINRICHTUNG EINER BRENNKRAFTMASCHINE**
METHOD FOR MONITORING A FUEL SUPPLY DEVICE PERTAINING TO AN INTERNAL COMBUSTION ENGINE
PROCEDE POUR SURVEILLER UN DISPOSITIF D'ALIMENTATION EN CARBURANT D'UN MOTEUR A COMBUSTION INTERNE

(30) Priorität: 05.04.2004 DE 102004016724
(43) Veröffentlichungstag der Anmeldung: 27.12.2006
(73) Patentinhaber: VDO Automotive AG, 93055 Regensburg (DE)
(72) Erfinder: ACHLEITNER, Erwin, 93083 Obertraubling (DE); CWIELONG, Martin, 93049 Regensburg (DE); ESER, Gerhard, 93155 Hemau (DE)
(86) Internationale Anmeldenummer: PCT/EP2005/050672
(87) Internationale Veröffentlichungsnummer: WO 2005/098561

(56) Entgegenhaltungen:
- DE-A1- 10 136 706
- DE-A1- 19 757 594
- DE-C1- 10 162 989
- US-A- 6 055 961
- US-B1- 6 234 148

## Beschreibung

Die Anforderungen an Brennkraftmaschinen, insbesondere in Kraftfahrzeugen, steigen aufgrund von gesetzlichen Bestimmungen bezüglich Schadstoffemissionen und aufgrund von Kundenwünschen hinsichtlich Zuverlässigkeit, effizientem Einsatz der Betriebsmittel, insbesondere von Kraftstoff, und geringen Wartungskosten. Diese Anforderungen können nur dann erfüllt werden, wenn Fehlfunktionen von Fahrzeugkomponenten zuverlässig und genau erkannt und protokolliert werden, so dass Fehlfunktionen ausgeglichen oder eine Reparatur der fehlerbehafteten Fahrzeugkomponenten veranlasst werden können. Zu diesem Zweck werden Fahrzeugkomponenten, insbesondere alle abgasrelevanten Fahrzeugkomponenten, wie zum Beispiel die Katalysatoranlage, die Lambdasonde und das gesamte Kraftstoffsystem, überwacht. Durch die Überwachungsmaßnahmen soll ein schadstoffarmer Betrieb sichergestellt und die Fahrsicherheit aufrecht erhalten werden. Dazu gehört, dass bei dem Auftreten von Fehlern ein Notlauf der Brennkraftmaschine sichergestellt und Folgeschäden vermieden werden können. Der Fahrer des Kraftfahrzeugs wird über die Fehlfunktion informiert, so dass dieser eine Überprüfung und gegebenenfalls Reparatur in einer Werkstatt veranlassen kann. Die Überwachungseinrichtung der Brennkraftmaschine speichert Informationen über die aufgetretenen Fehler, wie zum Beispiel die Fehlerart, den Fehlerort und die Betriebsbedingungen, unter denen die Fehlfunktion aufgetreten ist. Diese Informationen können in einer Werkstatt ausgewertet werden und unterstützen so die Reparaturarbeiten.

Herkömmliche Überwachungseinrichtungen für Brennkraftmaschinen sind aus den Druckschriften DE 101 36 706 A1, DE 197 57 594 A1, US 6,234,148 B1, DE 101 62 989 C1 und US 6,055,961 zu entnehmen.

Die Aufgabe der Erfindung ist, ein Verfahren anzugeben, das Kraftstoffzuführeinrichtungen von Brennkraftmaschinen zuverlässig überwacht.

Die Aufgabe wird gelöst durch die Merkmale der unabhängigen Patentansprüche. Vorteilhafte weiterbildungen der Erfindung sind in den Unteransprüchen gekennzeichnet.

Die Erfindung zeichnet sich aus durch ein Verfahren zum Überwachen einer Kraftstoffzuführeinrichtung einer Brennkraftmaschine, wobei die Kraftstoffzuführeinrichtung einen Niederdruckkreis, eine Hochdruckpumpe, die eingangsseitig gekoppelt ist mit dem Niederdruckkreis und die Kraftstoff in einen Kraftstoffspeicher fördert, ein Volumenstromsteuerventil, das der Hochdruckpumpe zugeordnet ist, und einen elektromechanischen Druckregulator, der mit dem Kraftstoffspeicher und dem Niederdruckkreis wirkverbunden ist und der Kraftstoff aus dem Kraftstoffspeicher in den Niederdruckkreis absteuern kann, umfasst. Bei dem Verfahren wird in einer erstern Betriebsart mittels eines ersten Reglers ein Stellsignal für das Volumenstromsteuerventil erzeugt, wobei der erste Regler mindestens einen Integralanteil umfasst und dem ersten Regler als eine Regeldifferenz eine Differenz eines vorgegebenen Kraftstoffdrucks und eines erfassten Kraftstoffdrucks zugeführt wird. In einer zweiten Betriebsart wird mittels eines zweiten Reglers ein Stellsignal für den elektromechanischen Druckregulator erzeugt, wobei dem zweiten Regler als die Regeldifferenz die Differenz des vorgegebenen Kraftstoffdrucks und des erfassten Kraftstoffdrucks zugeführt wird. In der ersten Betriebsart wird auf einen Fehler in der Kraftstaffzuführeinrichtung erkannt abhängig von dem Integralanteil des ersten Reglers. In der zweiten Betriebsart wird auf einen Fehler in der Kraftstoffzuführeinrichtung erkannt abhängig von dem erfassten Kraftstoffdruck und dem Stellsignal für den elektromechanischen Druckregulator.

Der Vorteil ist, dass Kraftstoffzuführeinrichtungen, die sowohl ein Volumenstromsteuerventil als auch einen elektromechanischen Druckregulator haben, zuverlässig überwacht werden können. Fehler in Komponenten der Kraftstoffzuführeinrichtung können auf einfache Weise erkannt werden. Das verfahren verwendet die zur Regelung des Kraftstoffdrucks im Kraftstoffspeicher ohnehin benötigten Einrichtungen und erfordert keine zusätzlichen Komponenten an der Kraftstoffzuführeinrichtung.

Vorteilhafterweise wird in der ersten Betriebsart ein Fehler in der Kraftstoffzuführeinrichtung erkannt, wenn der Integralanteil des ersten Reglers kleiner ist als eine vorgegebene untere Toleranzgrenze des Integralanteils oder größer ist als eine vorgegebene obere Toleranzgrenze des Integralanteils. Dieses Verfahren hat den Vorteil, dass auch bei instationärem Betrieb der Brennkraftmaschine Fehler in der Kraftstoff zuführeinrichtung erkannt werden können, wenn der Kraftstoffdruck im Kraftstoffspeicher nicht konstant ist.

Eine weitere bevorzugte Ausführungsform des Verfahrens zeichnet sich dadurch aus, dass in der zweiten Betriebsart ein Fehler in der Kraftstoffzuführeinrichtung erkannt wird, wenn der erfasste Kraftstoffdruck kleiner ist als eine von dem Stellsignal für den elektromechanischen Druckregulator vorgegebene untere Toleranzgrenze für den Kraftstoffdruck oder größer ist als eine von dem Stellsignal für den elektromechanischen Druckregulator vorgegebene obere Toleranzgrenze für den Kraftstoffdruck. Dies hat den Vorteil, dass fehlerhafte Komponenten der Kraftstoffzuführeinrichtung auf sehr einfache Weise erkannt werden können.

Gemäß einer Weiterbildung der Erfindung ist die Krafts toffzuführeinrichtung mit einem Kombinationsventil ausgestattet, das das Volumenstromsteuerventil und den elektromechanischen Druckregulator umfasst und das einen gemeinsamen Stell antrieb für das Volumenstromsteuerventil und den elektromechanischen Druckregulator hat. Das Verfahren stellt mittels des Kombinationsventils die erste Betriebsart dadurch ein, dass der aktuelle Wert eines gemeinsamen Stellsignals in einem ersten Wertebereich des gemeinsamen Stellsignals liegt, oder stellt die zweite Betriebsart dadurch ein, dass der aktuelle Wert des gemeinsamen Stellsignals in einem zweiten Wertebereich des gemeinsamen Stellsignals liegt. Ein Vorteil dieses Verfahrens ist, dass eine hohe Zuverlässigkeit und eine einfache Ansteuerung des Kombinationsventils möglich ist. Dadurch werden Kosten gespart.

Ausführungsbeispiele der Erfindung sind im Folgenden anhand der schematischen Zeichnungen erläutert. Es zeigen:
- Figur 1: eine Brennkraftmaschine mit einer Kraftstoffzuführeinrichtung,
- Figur 2: ein Kombinationsventil, das ein Volumenstromsteuerventil und einen elektromechanischen Druckregulator mit einem gemeinsamen Stellantrieb umfasst,
- Figur 3: die Kennlinie des Kombinationsventils aus Figur 2,
- Figur 4: das Blockschaltbild einer Regeleinrichtung zur Regelung des Kraftstoffdrucks in einem Kraftstoffspeicher, und
- Figur 5: ein Ablaufdiagramm zur Erkennung von Fehlern in der Kraftstoffzuführeinrichtung.

Elemente gleicher Konstruktion und Funktion sind figurenübergreifend mit den gleichen Bezugszeichen versehen.

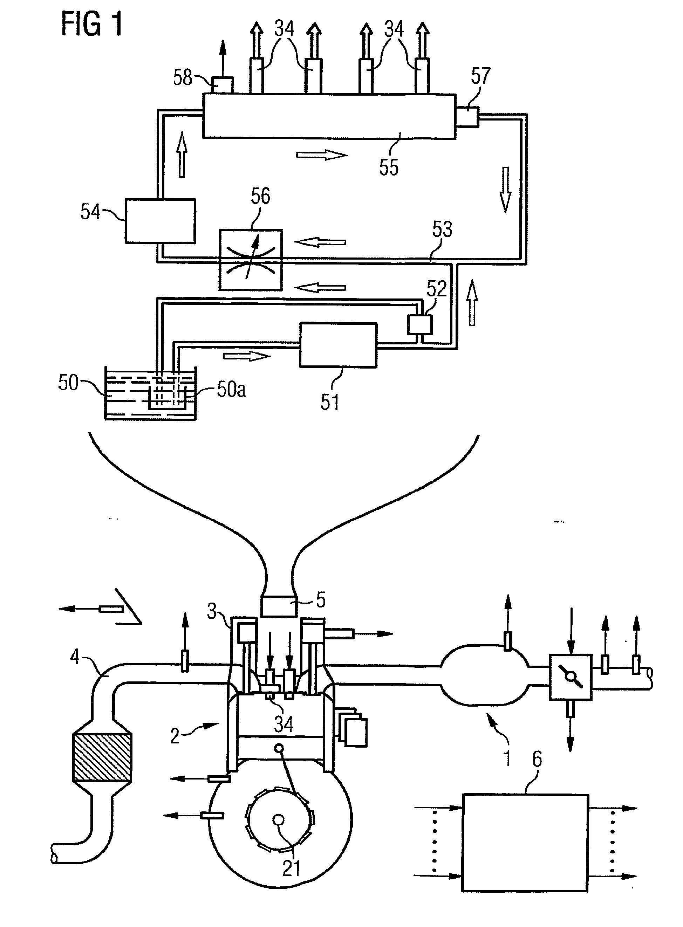

Eine Brennkraftmaschine (Figur 1) umfasst einen Ansaugtrak-t 1, einen Motorblock 2, einen zylinderkopf 3 und einen Abgas-trakt 4. Der Motorblock 2 umfasst mehrere Zylinder, welche Kolben und Pleuelstangen haben, über die sie mit einer Kurbelwelle 21 gekoppelt sind.

Der Zylinderkopf 3 umfasst einen Ventiltrieb mit einem Gaseinlassventil, einem Gasauslassventil und Ventilantrieben. Der Zylinderkopf 3 umfasst ferner ein Einspritzventil 34 und eine Zündkerze.

Ferner ist eine zuführeinrichtung 5 für Kraftstoff vorgesehen. Sie umfasst einen Kraftstofftank 50, der über eine erste Kraftstoffleitung mit einer Niederdruckpumpe 51 verbunden ist. Die Kraftstoffleitung mündet in einen Schwalltopf 50a. Ausgangsseitig ist die Niederdruckpumpe 51 mit einem Zulauf 53 einer Hochdruckpumpe 54 wirkverbunden. Ferner ist auch ausgangsseitig der Niederdruckpumpe 51 ein mechanischer Regulator 52 vorgesehen, welcher ausgangsseitig über eine weitere Kraftstoffleitung mit dem Kraftstofftank 50 verbunden ist. Die Niederdruckpumpe 51, der mechanische Regulator 52, die Kraftstoffleitung, die weitere Kraftstoffleitung und der Zulauf 53 bilden einen Niederdruckkreis.

Die Niederdruckpumpe 51 ist vorzugsweise so ausgelegt, dass sie während des Betriebs der Brennkraftmaschine immer eine ausreichend hohe Kraftstoffmenge liefert, die gewährleistet, dass ein vorgegebener Niederdruck nicht unterschritten wird.

Der Zulauf 53 ist hin zu der Hochdruckpumpe 54 geführt, welche ausgangsseitig den Kraftstoff hin zu einem Kraftstoffspeicher 55 fördert. Die Hochdruckpumpe 54 wird in der Regel von der Nockenwelle angetrieben und fördert somit bei konstanter Drehzahl der Kurbelwelle 21 ein konstantes Kraftstoffvolumen in den Kraftstoffspeicher 55.

Die Einspritzventile 34 sind mit dem Kraftstoffspeicher 55 wirkverbunden. Der Kraftstoff wird somit den Einspritzventilen 34 über den Kraftstoffspeicher 55 zugeführt.

In dem Vorlauf der Hochdruckpumpe 54, das heißt stromaufwärts der Hochdruckpumpe 54, ist ein Volumenstromsteuerventil 56 vorgesehen, mittels dessen der Volumenstrom eingestellt werden kann, der der Hochdruckpumpe 54 zugeführt wird. Durch eine entsprechende Ansteuerung des Volumenstromsteuervent i1s 56 kann ein vorgegebener Kraftstoffdruck FUF_SP im Kraftstoffspeicher 55 eingestellt werden.

Zusätzlich ist die Kraftstoffzuführeinrichtung 5 mit einem elektromagnetischen Druckregulator 57 ausgangsseitig des Kraftstoffspeichers 55 und mit einer Rückführleitung in den Niederdruckkreis versehen. Wird ein Kraftstoffdruck im Kraftstoffspeicher 55 größer als der durch entsprechende Ansteuerung des elektromechanischen Druckregulators 57 vorgegebene Kraftstoffdruck FUP_SP, dann öffnet der elektromechanische Druckregulator 57 und Kraftstoff wird aus dem Kraftstoffspeicher 55 in den Niederdruckkreis abgelassen.

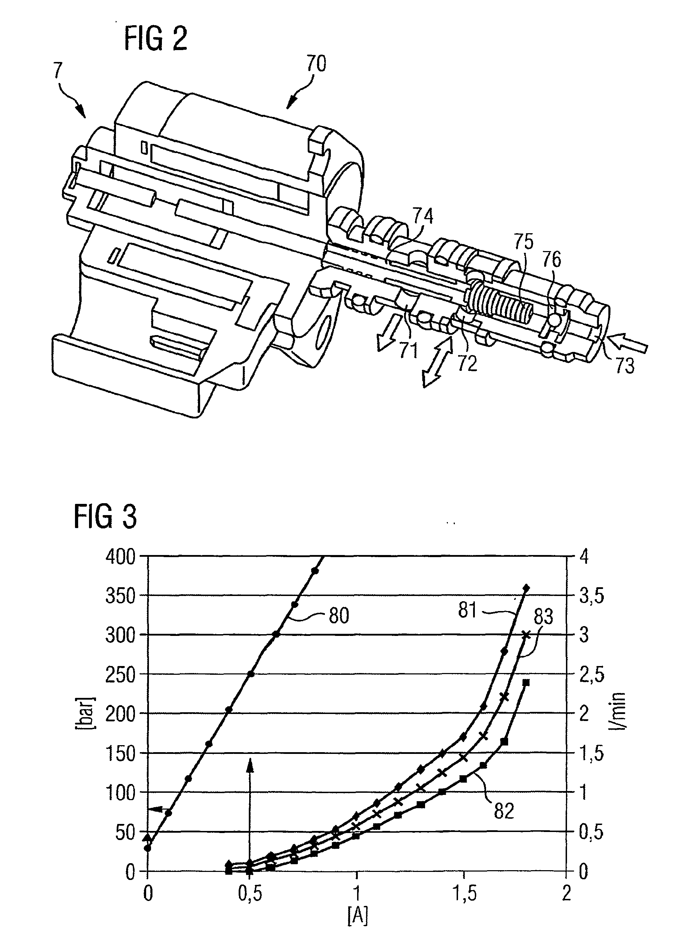

Alternativ kann auch das Volumenstromsteuerventil 56 in die Hochdruckpumpe 54 integriert sein, oder der elektromechanische Druckregulator 57 und das Volumenstromsteuerventil 56 werden über einen gemeinsamen Stellantrieb eingestellt, wie es beispielhaft in Figur 2 dargestellt und weiter unten näher erläutert ist.

Ferner ist der Brennkraftmaschine eine Steuereinrichtung 6 zugeordnet, der wiederum Sensoren zugeordnet sind, die verschiedene Messgrößen erfassen und jeweils den Messwert der Messgröße ermitteln. Die Steuereinrichtung 6 ermittelt abhängig von mindestens einer der Messgrößen Stellgrößen, die dann in entsprechende Stellsignale zum Steuern von Stellgliedern mittels entsprechender Stellantriebe umgesetzt werden.

Die Sensoren sind beispielsweise ein Pedalstellungsgeber, welcher die Stellung eines Fahrpedals erfasst, ein Kurbelwellenwinkelsensor, welcher einen Kurbelwellenwinkel erfasst und welchem dann eine Motordrehzahl zugeordnet wird, ein Luftmassenmesser und ein Kraftstoffdrucksensor 58, welcher einen Kraftstoffdruck FUP_AV in dem Kraftstoffspeicher 55 erfasst. Je nach Ausführungsform der Erfindung kann eine beliebige Untermenge der Sensoren oder auch zusätzliche Sensoren vorhanden sein.

Die Stellglieder sind beispielsweise als Gaseinlass- oder Gasauslassventile, Einspritzventile 34, Zündkerze, Drosselklappe, Niederdruckpumpe 51, Volumenstromsteuerventil 56 oder auch als elektromechanischer Druckregulator 57 ausgebildet.

Bevorzugt hat die Brennkraftmaschine auch weitere Zylinder, denen dann entsprechende Stellglieder zugeordnet sind.

Figur 2 zeigt ein Kombinationsventil 7, das einen Stellantrieb 70, das Volumenstromsteuerventil 56 und den elektromechanischen Druckregulator 57 umfasst. Das Kombinationsventil 7 hat einen Auslass 71, der mit dem Einlass der Hochdruckpumpe 54 wirkverbunden ist, einen Anschluss 72, der mit dem Zulauf 53 wirkverbunden ist, und einen Einlass 73, der mit dem Kraftstoffspeicher 55 wirkverbunden ist. Das Volumenstromsteuerventil 56 umfasst den Anschluss 72, den Auslass 71, einen Ventilsteller 74 und den Stellantrieb 70. Der elektromechanische Druckregulator 57 umfasst den Einlass 73, den Anschluss 72, den Ventilsteller 74, eine Feder 75, einen Ventilverschluss 76 und den Stellantrieb 70.

Der Stellantrieb 70 bewegt abhängig von einem Stellsignal PWM den Ventilsteller 74 in axialer Richtung. Die Feder 75 ist zwischen dem Ventilsteller 74 und dem Ventilverschluss 76 angeordnet und abhängig von der axialen Position des ventilstellers 74 vorgespannt. Der Ventilsteller 74 ist so ausgebildet, dass in dem Bereich einer ersten axialen Verschiebung des Ventilstellers 74 in Richtung zu der Feder 75 ausgehend von seiner axialen Position, in die er durch die Feder 75 gedrückt wird ohne ein Beaufschlagen des Stellantriebs 70 mit dem Stellsignal PWM, der Kraftstofffluss im Wesentlichen unterbunden ist. In diesem zustand strömt von dem Anschluss 72 lediglich ein Leckfluss hin zu dem Auslass 71. In dem Bereich einer zweiten axialen Verschiebung des Ventilstellers 74 durch ein entsprechendes Beaufschlagen des Stellantriebs 70 mit dem Stellsignal PWM wird der Anschluss 72 mit dem Auslass 71 hydraulisch gekoppelt. Abhängig von dem Stellsignal PWM kann in dem zweiten Bereich der axialen Verschiebung des ventilstellers 74 ein verschieden großer Volumenstrom von dem Zulauf 53 in den Anschluss 72 hin zum Auslass 71 und zu der Hochdruckpumpe 54 fließen.

Wenn die durch den Kraftstoffdruck in dem Kraftstoffspeicher 55 hervorgerufene Kraft größer ist als die durch die Vorspannung der Feder hervorgerufene und auf den Ventilverschluss 76 ausgeübte Kraft, wird der Einlass 73 mit dem Anschluss 72 hydraulisch gekoppelt, so dass Kraftstoff von dem Kraftstoffspeicher 55 in den Einlass 73 hin zum Auslass 72 in den Zulauf 53 fließen kann.

Der Kraftstoffdruck im Kraftstoffspeicher 55, der zu einem Öffnen des elektromechanischen Druckregulators mindestens erforderlich ist, kann durch Erhöhen oder Verringern des Stellsignals PWM eingestellt werden. Der Stellantrieb 70 erhöht oder verringert entsprechend die Kraft, die über den Ventilsteller 74 auf die Feder 75 einwirkt und die Feder 75 vorspannt. Die durch die Vorspannung der Feder 75 hervorgerufene Kraft schließt den elektromechanischen Druckregulator, wenn die durch den Kraftstoffdruck im Kraftstoffspeicher 55 auf den Ventilverschluss 76 ausgeübte Kraft kleiner ist.

Figur 3 zeigt Kennlinien des in Figur 2 dargestellten Kombinationsventils 7. Eine Druckkurve 80 zeigt den Zusammenhang zwischen dem Stellsignal PWM in Ampere und dem Kraftstoffdruck im Kraftstoffspeicher 55 in bar. Wird bei gegebenem Stellsignal PWM der Kraftstoffdruck im Kraftstoffspeicher 55 über den durch die Druckkurve 80 vorgegebenen Wert erhöht, so öffnet der elektromechanische Druckregulator 57 und verringert durch Ablassen von Kraftstoff aus dem Kraftstoffspeicher 55 in den Zulauf 53 den Kraftstoffdruck im Kraftstoffspeicher 55.

Für Werte des Stellsignals PWM, die größer sind als ein Schwellenwert, der in diesem Ausführungsbeispiel einen Wert von etwa 0,5 Ampere hat, öffnet sich das Volumenstromsteuerventil 56 und ermöglicht einen in Liter pro Minute angegebenen Kraftstofffluss. Das Diagramm zeigt eine obere Flusskurve 81, die eine obere Toleranzgrenze für das Kombinationsventil 7 darstellt, eine untere Flusskurve 82, die eine untere Toleranzgrenze für das Kombinationsventil 7 darstellt, und eine mittlere Flusskurve 83, die den Mittelwert zwischen oberer und unterer Flusskurve darstellt. Die Flusskurven 81, 82 und 83 zeigen, dass bei diesem Ausführungsbeispiel unterhalb des Schwellenwerts, also wenn das Volumenstromsteuerventil 56 im Wesentlichen geschlossen ist, noch der Leckfluss fließen kann.

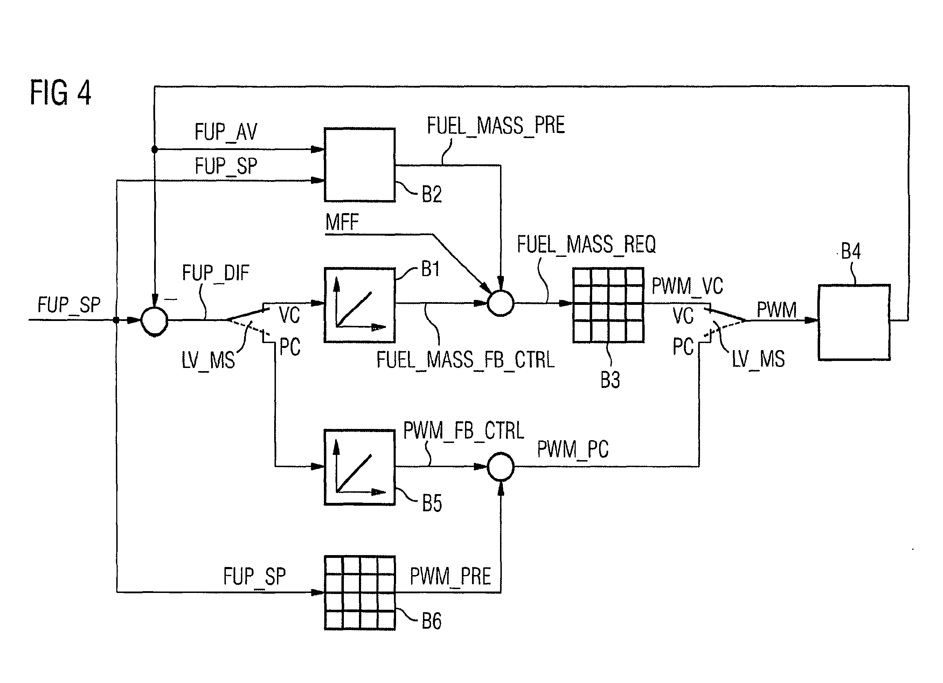

In Figur 4 ist ein Blockschaltbild einer Regeleinrichtung dargestellt, die zur Regelung des Kraftstoffdrucks in einer Kraftstoffzuführeinrichtung 5 verwendet werden kann, die ein Kombinationsventil 7 umfasst, wie es beispielhaft in Figur 2 ausgeführt ist. Die Regelung des Kraftstoffdrucks im Kraftstoffspeicher 55 erfolgt abhängig davon, in welcher Betriebsart die Kraftstoffzuführeinrichtung 5 aktuell betrieben wird.

In einer ersten Betriebsart wird der Kraftstoffdruck im Kraftstoffspeicher 55 abhängig von der von der Hochdruckpumpe 54 geförderten Kraftstoffmenge eingestellt. Das Volumenstromsteuerventil 56 ist geöffnet und die geförderte Kraftstoffmenge ist abhängig von der Ansteuerung des Volumenstromsteuerventils 56. In dieser Betriebsart ist der elektromechanische Druckregulator 57 geschlossen. Wenn mehr Kraftstoff in den Kraftstoffspeicher 55 gefördert als zugemessen wird, dann steigt der Kraftstoffdruck im Kraftstoffspeicher 55. Wenn weniger Kraftstoff in den Kraftstoffspeicher 55 gefördert als zugemessen wird, dann sinkt entsprechend der Kraftstoffdruck im Kraftstoffspeicher 55. Diese erste Betriebsart wird Mengenregelung VC genannt.

In einer zweiten Betriebsart ist das Volumenstromsteuerventil 56 geschlossen. Durch das Volumenstromsteuerventil 56 fließt nur der Leckfluss. Ist der elektromechanische Druckregulator 57 geschlossen und wird weniger Kraftstoff zugemessen als durch den Leckfluss in den Kraftstoffspeicher 55 gefördert wird, dann steigt der Kraftstoffdruck im Kraftstoffspeicher 55, bis der elektromechanische Druckregulator 57 öffnet und Kraftstoff in den Zulauf 53 absteuert. Dadurch wird der Kraftstoffdruck im Kraftstoffspeicher 55 auf den durch den elektromechanischen Druckregulator 57 vorgegebenen Kraftstoffdruck begrenzt. Diese zweite Betriebsart wird deshalb Druckregelung PC genannt.

Figur 4 zeigt zwei Regelkreise, zwischen denen abhängig von der aktuell eingestellten Betriebsart der Kraftstoffzuführeinrichtung 5 mittels eines Schalters LV_MS umgeschaltet werden kann. Ist die aktuell eingestellte Betriebsart die erste Betriebsart, also die Mengenreglung VC, dann steht der Schalter LV_MS in der Position VC. Ist die aktuell eingestellte Betriebsart die zweite Betriebsart, also die Druckregelung PC, dann steht der Schalter LV_MS in der Position PC.

Aus der Differenz zwischen dem vorgegeben Kraftstoffdruck FUP_SP und dem erfassten Kraftstoffdruck FUP_AV wird eine Regeldifferenz FUP_DIF bestimmt. Die Regeldifferenz FUP_DIF wird bei der Mengenregelung VC einem Regler in Block B1 zugeführt. Dieser Regler umfasst mindestens einen Integralanteil I_CTRL und ist vorzugsweise als PI-Regler ausgeführt. In dem Block B1 wird ein Reglerwert FUEL_MASS_FB_CTRL des ersten Reglers bestimmt. Abhängig von dem vorgegebenen Kraftstoffdruck FUP_SP und dem erfassten Kraftstoffdruck FUP_AV wird in einem Block B2 ein Vorsteuerwert FUEL_MASS_PRE der zu fördernden Kraftstoffmasse ermittelt. Der Vorsteuerwert FUEL_MASS_PRE der zu fördernden Kraftstoffmasse, der Reglerwert FUEL_MASS_FB_CTRL des ersten Reglers und die einzuspritzende Kraftstoffmasse MFF werden aufsummiert zu einer zu fördernden Kraftstoffmasse FUEL_MASS_REQ. In einem Block B3 wird abhängig von der zu fördernden Kraftstoffmasse FUEL_MASS_REQ ein Stellsignal PWM_VC bei Mengenregelung VC bestimmt. Der Block B3 umfasst vorzugsweise ein Kennfeld. Ein Block B4 repräsentiert die in Figur 1 dargestellte Kraftstoffzuführeinrichtung 5 mit dem in Figur 2 dargestellten Kombinationsventil 7. Das Stellsignal PWM, das bei Mengenregelung VC gleich dem Stellsignal PWM_VC bei Mengenregelung VC ist, ist die Eingangsgröße des Blocks B4. Die Ausgangsgröße des Blocks B4 ist der erfasste Kraftstoffdruck FUP_AV, der beispielsweise mittels des Kraftstoffdrucksensors 58 erfasst wird.

Bei Druckregelung PC wird die Regeldifferenz FUP_DIF einem zweiten Regler in einem Block B5 zugeführt. Der Regler in Block B5 umfasst vorzugsweise einen PI-Regler. In einem Block B6 wird abhängig von dem vorgegebenen Kraftstoffdruck FUP_SP ein Vorsteuerwert PWM_PRE für ein Stellsignal PWM_PC bei Druckregelung PC bestimmt, zu dem ein in dem Block B5 ermittelter Reglerwert PWM_FB_CTRL des zweiten Reglers addiert wird. Die Summe ist das Stellsignal PWM_PC bei Druckregelung PC. Bei Druckregelung PC ist das Stellsignal PWM gleich dem Stellsignal PWM_PC bei Druckregelung PC. Der Block B6 umfasst vorzugsweise ein Kennfeld.

Die Kennfelder der Blöcke B3 und B6 werden bevorzugt vorab durch Versuche an einem Motorprüfstand, durch Simulationen oder durch Fahrversuche ermittelt. Alternativ können auch beispielsweise auf physikalischen Modellen basierende Funktionen verwendet werden.

Das in Figur 4 dargestellte Blockdiagramm ist eine bevorzugte Ausführungsform einer Regeleinrichtung für eine Kraftstoffzuführeinrichtung 5 mit einem Kombinationsventil 7 nach Figur 2 und Kennlinien nach Figur 3. Falls das-Volumenstromsteuerventil 56 und der elektromechanische Druckregulator 57 jedoch jeweils einen eigenen Stellantrieb haben, dann wirkt das Stellsignal PNM_VC bei Mengenregelung VC auf den Stellantrieb des volumenstromsteuerventils 56 und das Stellsignal PWM_PC bei Druckregelung PC auf den Stellantrieb des elektromechanischen Druckregulators 57. Dem Block B4 werden folglich anstelle des gemeinsamen Stellsignals PWM sowohl das Stellsignal PWM_VC bei Mengenregelung VC als auch das Stellsignal PWM_PC bei Druckregelung PC zugeführt. Die Regelkreise für die erste und die zweite Betriebsart arbeiten in diesem Fall vorzugsweise parallel, so dass auf den in Figur 4 dargestellten Schalter LV_MS verzichtet werden kann. Den Blöcken B1 und B5 wird gleichzeitig die Regeldifferenz FUP_DIF zugeführt.

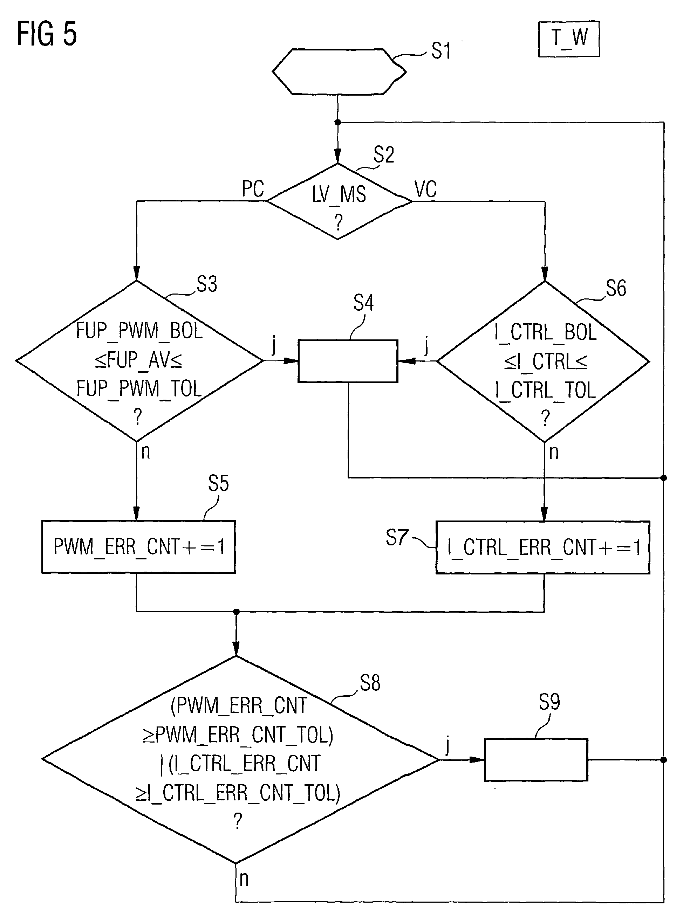

Figur 5 zeigt ein Ablaufdiagramm zur Erkennung von Fehlern in einer Kraftstoffzuführeinrichtung 5 einer Brennkraftmaschine. Das Verfahren wird in einem Schritt S1 gestartet. Vorzugsweise wird der Schritt S1 beim Start der Brennkraftmaschine ausgeführt. Der Schritt S1 umfasst vorzugsweise weitere, hier nicht dargestellte, Initialisierungsschritte, wie beispielsweise ein Zurücksetzen von Zähleinrichtungen.

In einem Schritt S2 wird die Stellung des Schalters LV_MS geprüft. Falls kein Schalter LV_MS vorhanden ist, dann wird in Schritt S2 die aktuelle Betriebsart der Kraftstoffzuführeinrichtung 5 festgestellt.

Falls die aktuelle Betriebsart die Druckregelung PC ist, wird in einem Schritt S3 der erfasste Kraftstoffdruck FUP__AV überprüft. Ist der erfasste Kraftstoffdruck FUP_AV größer oder gleich einer vorgegebenen unteren Toleranzgrenze FUP_PMM_BOL für den Kraftstoffdruck FUP_AV und kleiner oder gleich einer vorgegebene oberen Toleranzgrenze FUP_PMW_TOL für den Kraftstoffdruck FUP_AV, so wird aktuell kein Verlassen des durch die Toleranzgrenzen FUP_PWM_BOL und FUP_PWM_TOL vorgegebenen wertebereichs erkannt und die Bearbeitung in einem Schritt S4 fortgesetzt. Liegt der erfasste Kraftstoffdruck FUP_AV in Schritt S3 außerhalb des durch die Toleranzgrenzen FUP_PWM_BOL und FUP_PWM_TOL vorgegebenen Wertebereichs, so kann ein Fehler vorliegen und die Bearbeitung wird in einem Schritt S5 fortgesetzt. In dem Schritt S4 werden beispielsweise die Fehlerzähler überprüft und gegebenenfalls mit einem neuen Wert versehen. Die Fehlerzähler werden beispielsweise um einen vorgegebenen Betrag verringert. Nach dem Schritt S4 wird die Bearbeitung nach einer Wartezeitdauer T_W erneut in dem Schritt S2 fortgeführt. Ist die Bedingung des Schritts S3 nicht erfüllt, so wird in dem Schritt S5 ein Fehlerzähler PWM_ERR_CNT des Stellsignals PWM erhöht, z.B. um eins.

Falls die Mengenregelung VC die aktuelle Betriebsart ist, so wird im Anschluss an den Schritt S2 in einem Schritt S6 der Integralanteil I_CTRL des ersten Reglers in Block B1 überprüft. Ist der Integralanteil I_CTRL größer oder gleich einer vorgegebenen unteren Toleranzgrenze I_CTRL_BOL des Integralanteils und kleiner oder gleich einer vorgegebenen oberen Toleranzgrenze I_CTRL__TOL des Integralanteils, dann wird aktuell kein Verlassen des durch die Toleranzgrenzen I_CTRL_BOL und I_CTRL_TOL vorgegebenen Wertebereichs erkannt und die Bearbeitung in dem Schritt S4 fortgesetzt. Andernfalls wird die Bearbeitung in einem Schritt S7 fortgesetzt. Nach dem Schritt S4 wird die Bearbeitung nach der Wartezeitdauer T__W in dem Schritt S2 fortgesetzt. Ist die Bedingung des Schritts S6 nicht erfüllt, dann wird in dem Schritt S7 ein Fehlerzähler I_CTRL_ERR_CNT des Integralanteils I_CTRL erhöht, z.B. um 1.

Auf das Erhöhen des Fehlerzählers in dem Schritt S5 oder in dem Schritt S7 folgt ein Schritt S8, in dem die Werte der Fehlerzähler überprüft werden. Ist der Fehlerzähler PWM__ERR_CNT des Stellsignals PWM größer oder gleich einer vorgegebenen oberen Fehlergrenze PWM_ERR_CNT_TOL des Fehlerzählers PWM_ERR_CNT des Stellsignals PWM oder ist der Fehlerzähler I_CTRL__ERR_CNT des Integralanteils I_CTRL größer oder gleich einer vorgegebenen oberen Fehlergrenze I_CTRL_ERR_CNT_TOL des Fehlerzählers I_CTRL_ERR_CNT des Integralanteils I_CTRL, dann wird ein Fehler erkannt und in einem Schritt S9 werden Maßnahmen ergriffen, die zum Beispiel den genauen Fehlerort und die Fehlerumstände registrieren und speichern, einen sicheren Betrieb der Brennkraftmaschine sicherstellen und den Fehler an den Fahrer des Kraftfahrzeugs melden. Wird in dem Schritt S8 kein Überschreiten der Fehlergrenzen PWM__ERR_CNT_TOL und I_CTRL_ERR_CNT_TOL festgestellt, so wird die Bearbeitung nach der Wartezeitdauer T_W in dem Schritt S2 fortgeführt

In einem weiteren, hier nicht dargestellten Ausführungsbeispiel, sind keine Fehlerzähler vorgesehen. In diesem Fall wird ein Fehler unmittelbar erkannt, wenn die Bedingungen in dem Schritt S3 oder in dem Schritt S6 nicht erfüllt sind.

## Patentansprüche

1. Verfahren zum Überwachen einer Kraftstoffzuführeinrichtung (5) einer Brennkraftmaschine, wobei die Kraftstoffzuführeinrichtung (5) umfasst:
- einen Niederdruckkrei s,
- eine Hochdruckpumpe (54), die eingangsseitig gekoppelt ist mit dem Niederdruckkreis und die Kraftstoff in einen Kraftstoffspeicher (5 5) fördert,
- ein Volumenstromsteuerventil (56), das der Hochdruckpumpe (54) zugeordnet ist, und
- einen elektromechanischen Druckregulator (57), der mit dem Kraftstoffspeicher (55) und dem Niederdruckkreis wirkverbunden ist und der Kraftstoff aus dem Kraftstoffspeicher (55) in den Niederdruckkreis absteuern kann,
**dadurch gekennzeichnet , dass**
- in einer ersten Betriebsart mittels eines ersten Reglers ein Stellsignal (PMM_VC) für das Volumenstromsteuerventil erzeugt wird, wobei der erste Regler mindestens einen Integralanteil (I_CTRL) umfasst und dem ersten Regler als eine Regeldifferenz (FUP_DIF) eine Differenz eines vorgegebenen Kraftstoffdrucks (FUP_SP) und eines erfassten Kraftstoffdrucks (FUP_AV) zugeführt wird,
- in einer zweiten Betriebsart mittels eines zweiten Reglers ein Stellsignal (PWN_PC) für den elektromechanischen Druckregulator erzeugt wird, wobei dem zweiten Regler als die Regeldifferenz (FUP_DIF) die Differenz des vorgegebenen Kraftstoffdrucks (FUP_SP) und des erfassten Kraftstoffdrucks (FUP_AV) zugeführt wird,
- in der ersten Betriebsart auf einen Fehler in der Kraftstoffzuführeinrichtung (5) erkannt wird abhängig von dem Integralanteil (I_CTRL) des ersten Reglers, und
- in der zweiten Betriebsart auf einen Fehler in der Kraftstoffzuführeinrichtung (5) erkannt wird abhängig von dem erfassten Kraftstoffdruck (FUP_AV) und dem Stellsignal (PNM_PC) für den elektromechanischen Druckregulator.

2. Verfahren nach Anspruch 1, **dadurch gekennzeichnet, dass** in der ersten Betriebsart ein Fehler in der Kraftstoffzuführeinrichtung (5) erkannt wird, wenn der Integralanteil (I_CTRL) des ersten Reglers kleiner ist als eine vorgegebene untere Toleranzgrenze (I_CTRI_BOL) des Integralanteils (I_CTRL) oder größer ist als eine vorgegebene obere Toleranzgrenze (I_CTRL_TOL) des Integralanteils (I_CTRL).

3. Verfahren nach Anspruch 1 oder 2, **dadurch gekennzeichnet, dass** in der zweiten Betriebsart ein Fehler in der Kraftstoffzuführeinrichtung (5) erkannt wird, wenn der erfasste Kraftstoffdruck (FUP_AV) kleiner ist als eine von dem Stellsignal (PWM_PC) für den elektromechanischen Druckregulator vorgegebene untere Toleranzgrenze (FUP_PWM_BOL) für den Kraftstoffdruck (FUP_AV) oder größer ist als eine von dem Stellsignal (PWM_PC) für den elektromechanischen Druckregulator vorgegebene obere Toleranzgrenze (FUP_PMM_TO'L) für den Kraftstoffdruck (FUP_AV) .

4. Verfahren nach einem der vorstehenden Ansprüche, **dadurch gekennzeichnet, dass** ein Kombinationsventil (7) vorgesehen ist, das das Volumenstromsteuerventil (56) und den elektromechanischen Druckregulator (57) umfasst und das einen gemeinsamen Stellantrieb (70) für das Volumenstromsteuerventil (56) und den elektromechanischen Druckregulator (57) hat., und mittels des Kombinationsventils 7 die erste. Betriebsart **dadurch** eingestellt wird, dass der aktuelle Wert eines gemeinsamen Stellsignals (PWM) in einem ersten Wertebereich des gemeinsamen Stellsignals (PWM) liegt, oder die zweite Betriebsart **dadurch** eingestellt wird, dass der aktuelle Wert des gemeinsamen Stellsignals (PWM) in einem zweiten Wertebereich des gemeinsamen Stellsignals (PWM) liegt.

## Claims

1. Method for monitoring a fuel supply device (5) pertaining to an internal combustion engine, wherein the fuel supply device (5) comprises:
- a low pressure circuit,
- a high pressure pump (54) that is coupled to the low pressure circuit at the input side and conveys the fuel into a fuel accumulator (55),
- a volume flow control valve (56) associated with the high pressure pump (54), and
- an electromechanical pressure regulator (57) that is actively connected to the fuel accumulator (55) and the low pressure circuit and can stop the flow of fuel from the fuel accumulator (55) into the low pressure circuit,
**characterised in that**
- in a first operating mode a regulating signal (PWM_VC) for the volume flow control valve is generated by means of a first regulator, wherein the first regulator comprises at least one integral part (I_CTRL) and a difference in a specified fuel pressure (FUP_SP) and a detected fuel pressure (FUP_AV) is supplied to the first regulator as a control deviation (FUP_DIF),
- in a second operating mode a regulating signal (PWM_PC) for the electromechanical pressure regulator is generated by means of a second regulator, wherein the difference in the specified fuel pressure (FUP_SP) and the detected fuel pressure (FUP_AV) is supplied to the second regulator as the control deviation (FUP_DIF),
- in the first operating mode an error in the fuel supply device (5) is identified as a function of the integral part (I_CTRL) of the first regulator, and
- in the second operating mode an error in the fuel supply device (5) is identified as a function of the detected fuel pressure (FUP_AV) and the regulating signal (PWM_PC) for the electromechanical pressure regulator.

2. Method according to claim 1, **characterised in that** in the first operating mode an error in the fuel supply device (5) is identified if the integral part (I_CTRL) of the first regulator is less than a specified lower tolerance limit (I_CTRL_BOL) of the integral part (I_CTRL) or is greater than a specified upper tolerance limit (I_CTRL_TOL) of the integral part (I_CTRL).

3. Method according to claim 1 or 2, **characterised in that** in the second operating mode an error in the fuel supply device (5) is identified if the detected fuel pressure (FUP_AV) is less than a lower tolerance limit (FUP_PWM_BOL) for the fuel pressure (FUP_AV) specified by the regulating signal (PWM_PC) for the electromechanical pressure regulator or is greater than an upper tolerance limit (FUP_PWM_TOL) for the fuel pressure (FUP_AV) specified by the regulating signal (PWM_PC) for the electromechanical pressure regulator.

4. Method according to any one of the preceding claims, **characterised in that** a combination valve (7) is provided which comprises the volume flow control valve (56) and the electromechanical pressure regulator (57) and has a common actuator (70) for the volume flow control valve (56) and the electromechanical pressure regulator (57), and by means of the combination valve (7) the first operating mode is adjusted such that the current value of a common regulating signal (PWM) is in a first value range of the common regulating signal (PWM), or the second operating mode is adjusted such that the current value of the common regulating signal (PWM) is in a second value range of the common regulating signal (PWM) .

## Revendications

1. Procédé de contrôle d'un dispositif d'alimentation en carburant (5) d'un moteur à combustion interne, le dispositif d'alimentation en carburant (5) comportant
- un circuit basse pression,
- une pompe haute pression (54), dont l'entrée est couplée au circuit basse pression et qui refoule le carburant dans un accumulateur de carburant (55),
- une soupape de commande du flux volumique (56), laquelle est associée à la pompe haute pression (54),
- et un régulateur de pression (57) électromécanique qui est en liaison active avec l'accumulateur de carburant (55) et le circuit basse pression et peut commander l'évacuation du carburant hors de l'accumulateur de carburant (55) vers le circuit basse pression,
**caractérisé en ce que**
- dans un premier mode de service, un signal de commande (PWM_VC) pour la soupape de commande du flux volumique est généré au moyen d'un premier régulateur, ledit premier régulateur comportant au moins une composante intégrale (I_CTRL), et une différence entre une pression prédéfinie du carburant (FUP_SP) et une pression enregistrée du carburant (FUP_AV) étant acheminée sous la forme d'une différence de réglage (FUP_DIF) vers le premier régulateur,
- dans un deuxième mode de service, un signal de commande (PWM_PC) pour le régulateur de pression électromécanique est généré au moyen d'un deuxième régulateur, la différence entre la pression prédéfinie du carburant (FUP_SP) et la pression enregistrée du carburant (FUP_AV) étant acheminée sous la forme d'une différence de réglage (FUP_DIF) vers le deuxième régulateur,
- dans le premier mode de service, un défaut dans le dispositif d'alimentation en carburant (5) est détecté en fonction de la composante intégrale (I_CTRL) du premier régulateur,
- dans le deuxième mode de service, un défaut dans le dispositif d'alimentation en carburant (5) est détecté en fonction de la pression enregistrée du carburant (FUP_AV) et du signal de commande (PWM_PC) pour le régulateur de pression électromécanique.

2. Procédé selon la revendication 1, **caractérisé en ce que**, dans le premier mode de service, un défaut dans le dispositif d'alimentation en carburant (5) est détecté lorsque la composante intégrale (I_CTRL) du premier régulateur est inférieure à une limite de tolérance inférieure (I_CTRL_BOL) prédéfinie de la composante intégrale (I_CTRL) ou est supérieure à une limite de tolérance supérieure (I_CTRL_TOL) prédéfinie de la composante intégrale (I_CTRL).

3. Procédé selon la revendication 1 ou 2, **caractérisé en ce que**, dans le deuxième mode de service, un défaut dans le dispositif d'alimentation en carburant (5) est détecté lorsque la pression enregistrée du carburant (FUP_AV) est inférieure à une limite de tolérance inférieure (FUP_PWM_BOL) de la pression du carburant (FUP_AV), prédéfinie par le signal de commande (PWM_PC) pour le régulateur de pression électromécanique ou est supérieure à une limite de tolérance supérieure (FUP_PWM_TOL) de la pression du carburant (FUP_AV), prédéfinie par le signal de commande (PWM_PC) pour le régulateur de pression électromécanique.

4. Procédé selon l'une quelconque des revendications précédentes, **caractérisé en ce qu'**il est prévu une soupape combinée (7) qui comporte la soupape de commande du flux volumique (56) et le régulateur de pression (57) électromécanique et possède un mécanisme de commande (70) commun pour la soupape de commande du flux volumique (56) et le régulateur de pression électromécanique (57), et au moyen de la soupape combinée (7) le premier mode de service est activé par le fait que la valeur actuelle d'un signal de commande (PWM) commun se situe dans une première plage de valeurs du signal de commande (PWM) commun, ou le deuxième mode de service est activé par le fait que la valeur actuelle du signal de commande (PWM) commun se situe dans une deuxième plage de valeurs du signal de commande (PWM) commun.
